# EUROPEAN PATENT APPLICATION

(11) **EP 4 151 561 A1**
(43) Date of publication of application: **22.03.2023**
(21) Application number: 20740059.9
(22) Date of filing: 12.05.2020
(51) Int. Cl.: B65G 1/14, B65G 49/06, B65D 19/06, B66C 1/10, B65G 57/00

(54) **TOOL FOR SECURING AND TURNING OVER FOR ASSEMBLING PHOTOVOLTAIC SOLAR TRACKER SECTIONS, SYSTEM AND ASSOCIATED ASSEMBLY METHOD**

(71) Applicant: Acciona Generación Renovable, S.A., 31621 Sarriguren (Navarra) (ES)
(72) Inventor: SÁNCHEZ ZARDOYA, Iñaki, 28108 Alcobendas (Madrid) (ES); MIRANDA SANCHO, Carmen, 31621 Sarriguren (Navarra) (ES); ESPARZA HUARTE, Fernando, 31621 Sarriguren (Navarra) (ES); MOLINA GOICOCHEA, Francisco, 31621 Sarriguren (Navarra) (ES); NAVESO RUBIO, Juan Ignacio, 31621 Sarriguren (Navarra) (ES)
(74) Representative: Pons
(86) International application number: PCT/ES2020/070303
(87) International publication number: WO 2021/229110

(57) **Abstract**

The present invention relates to a tool for mounting, rotating and loading sections of solar trackers on autonomous transportation means in order to transport them to the specific location of said solar trackers in the field, wherein the fastening and rotating tool for mounting sections of photovoltaic solar trackers makes the pre-assembly, transportation and installation of the solar tracker section possible, reducing the mounting time of each operation. The invention also relates to an associated system and method that makes use of the fastening and rotating tool for mounting sections of photovoltaic solar trackers.

## Description

### OBJECT OF THE INVENTION

The present invention is included in the technical field of mounting photovoltaic solar trackers in a pre-assembled manner and specifically in the field of tools for mounting, rotating and loading the sections of pre-assembled solar trackers on autonomous transportation means in order to transport them to the specific location of said solar trackers in the field. It also includes the mounting system.

The object of the present invention is a fastening and rotating tool for mounting sections of photovoltaic solar trackers which enables the tasks of pre-assembly, transportation and installation of the solar tracker section, thereby reducing the mounting times for each of the operations. The invention also relates to an associated system and method that makes use of the fastening and rotating tool for mounting pre-assembled sections of photovoltaic solar trackers, as well as the means associated with the mounting system.

### BACKGROUND OF THE INVENTION

Photovoltaic solar trackers are formed by a set of photovoltaic panels which are coupled to a structure that has the capability to be oriented in order to track the trajectory of the sun at all times and capture the maximum amount of solar radiation possible at all times of the day.

Document JP2016204966A, which relates to a solar power plant construction method able to guarantee safety for workers in a short construction period and to be installed at a low cost, and a container for transporting a tracker used in the method, is known in the state of the art. It comprises a step of manufacturing the panel by means of the arrangement and fastening the solar modules transported to an assembly plant in a support frame; a transportation step in which solar panels are accumulated in a specific container and the container is loaded on a container truck in order to transport it to a power generation site; and a solar panel installation process, taking into account the position of the container truck with respect to the support where the solar panel will be installed.

Document US2014076383A1 is also known, and describes an apparatus for stacking a plurality of solar module arrays, each having a plurality of solar panels. The apparatus includes a lower portion disposed on top of a first solar panel support channel corresponding to a first solar module array, and an upper portion for supporting a second solar panel support channel corresponding to a second solar module array, wherein the second solar module array is stacked above the first solar module array.

The fastening and rotating tool for mounting pre-assembled sections of photovoltaic solar trackers of the present invention facilitates the pre-assembly, transportation and installation of the solar tracker section, reducing the mounting times of each operation, thereby improving the features of mounting systems used in the field known in the state of the art.

### DESCRIPTION OF THE INVENTION

The present invention relates to a fastening and rotating tool for mounting pre-assembled sections of solar trackers which allows solar tracker sections to be mounted, rotated and loaded on autonomous transportation means in order to transport them to the specific location of said solar trackers in the field.

The fastening and rotating tool comprises a frame which in turn comprises:
∘ at least two hooks comprising a first height dimension and which are configured to be fastened by installation means of the solar tracker sections; and
∘ mortises arranged opposite from the at least two hooks and which are configured to receive the at least two hooks of a fastening and rotating tool arranged below;
such that the first height dimension of the at least two hooks defines the separation between a first solar tracker section and a second solar tracker section arranged above the first solar tracker section during the transportation of the same.

In this manner, it is possible to combine into a single element the means that enable the attachment of the fastening and rotating tool and the means that allow for the correct stacking of at least the first solar tracker section and the second solar tracker section arranged above the first solar tracker section for the transportation of the same.

Optionally, the fastening and rotating tool further comprises a central slit arranged in the frame and configured to couple the fastening and rotating tool to a central beam of the solar tracker section. Preferably, the central slit is arranged equidistant to the at least two hooks. Also preferably, the central slit is arranged in the central portion of the fastening and rotating tool. The central slit defines a longitudinal direction corresponding to the longitudinal direction of the central beam. In this manner, the tool can couple to any one of the solar tracker sections. The coupling is preferably carried out by means of a screw joint.

Optionally, the mortises further comprise first holes which in turn define an axis of rotation and are configured to carry out the rotation of the fastening and rotating tool, as well as the tracker section joined to the same. Preferably, the first holes are configured to carry out the rotation of the fastening and rotating tool 180°. Preferably, the axis of rotation defined by the first holes of the mortises is parallel to the longitudinal direction of the central slit.

Optionally, the mortises further comprise a second hole configured to carry out the locking of the fastening and rotating tool during the transportation. Preferably, the second hole is perpendicular to a transverse direction which is perpendicular to the longitudinal direction of the central slit. In this manner, each of the second holes of each one of the fastening and rotating tools are arranged in the transverse direction during the transportation of at least the first solar tracker section and the second solar tracker section arranged above the first solar tracker section.

The associated mounting system of the present invention comprises at least one fastening tool for each one of the solar tracker sections, preferably at least two fastening and rotating tools for each solar tracker section, arranged along the longitudinal direction of the central beam.

The system further comprises pre-assembly means configured to carry out the pre-assembly of the fastening and rotating tool or tools to the central beam of the solar tracker section and consequently to said solar tracker section.

The system further comprises support means configured to support the tracker section along with the fastening and rotating tool or tools when the rotation of the tracker section along with the fastening and rotating tool or tools is carried out.

The system further comprises rotating means configured to carry out the rotation of the tracker section by means of the rotating tool or tools from the pre-assembly means to the support means.

The system further comprises autonomous transportation means configured to transport the tracker sections along with the rotating tools to the definitive location thereof in the field.

The rotating means are also configured to carry out the movement of the tracker section by means of the rotating tool or tools from the support means to the autonomous transportation means.

The system further comprises locking means configured to carry out the locking of at least two tracker sections on the autonomous transportation means, the first solar tracker section and the second solar tracker section arranged above the first solar tracker section during the transportation of the same by means of the autonomous transportation means. Preferably, the locking means comprise at least one pin arranged inside the second hole of each of one of the mortises of each fastening and rotating tool.

The system further comprises means for installing the pre-assembled solar tracker sections on supports of the solar tracker in the field.

The invention also relates to an associated mounting method carried out with at least one fastening tool for each one of the solar tracker sections, preferably with at least two fastening and rotating tools for each one of the solar tracker segments, arranged along the longitudinal direction of the central beam.

The method further comprises a pre-assembly step wherein the pre-assembly of the fastening and rotating tool or tools to the central beam of the solar tracker section has been carried out and, thus, to said solar tracker section.

The method further comprises a rotating step wherein the rotation of the tracker section is carried out by means of the rotating tool or tools after the pre-assembly step.

The method further comprises a support step wherein the support of the tracker section along with the fastening and rotating tool or tools is carried out after the step of rotating the tracker section along with the fastening and rotating tool or tools.

The method further comprises a step of moving the tracker section along with the rotating tool or tools after the support step.

The method further comprises an autonomous transportation step wherein the transportation of the tracker sections along with the rotating tools to the definitive location thereof in the field is carried out.

The method further comprises a locking step wherein the locking of at least two tracker sections is carried out, the first solar tracker section and the second solar tracker section arranged above the first solar tracker section during the transportation of the same. Preferably, the locking step is carried out by arranging at least one pin arranged inside the second hole of each one of the mortises of each fastening and rotating tool.

The method further comprises a step of installing the solar tracker sections on supports of the solar tracker in the field.

The method further comprises a step of removing the fastening and rotating tool or tools.

### DESCRIPTION OF THE DRAWINGS

To implement the present description and for the purpose of providing a better understanding of the features of the invention according to a preferred embodiment thereof, a set of figures is attached as a part of this description in which the following has been depicted with an illustrative and non-limiting character:
Figure 1 shows a perspective view of the fastening and rotating tool for mounting sections of photovoltaic solar trackers of the present invention.
Figure 2 shows a perspective view of the associated mounting system of the present invention, wherein the means for installing the solar trackers on the supports of the solar tracker in the field are not shown.
Figure 3 shows a perspective view of the rotating step of the method of the present invention, wherein not all of the rotating means are shown.
Figure 4 shows an elevation view of the autonomous transportation means and the locking means of the mounting system of the present invention.
Figure 5 shows a perspective view of the locking means of the mounting system of the present invention.
Figure 6 shows a perspective view of the means for installing the solar tracker sections on the supports of the solar tracker in the field.

### PREFERRED EMBODIMENT OF THE INVENTION

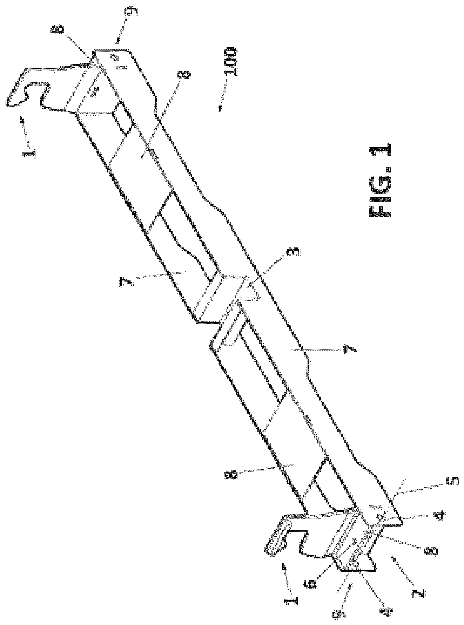

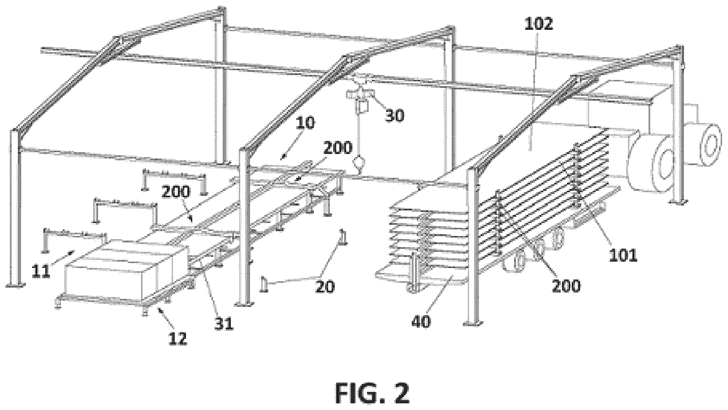

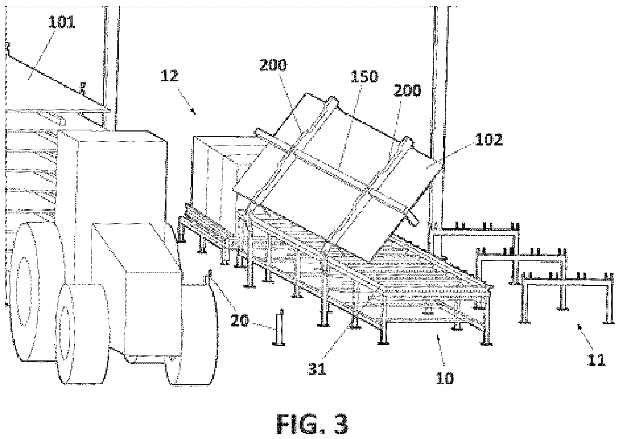

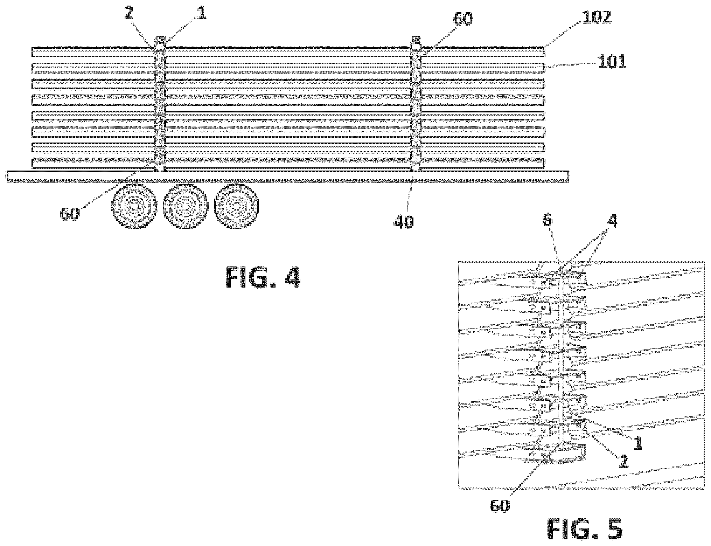

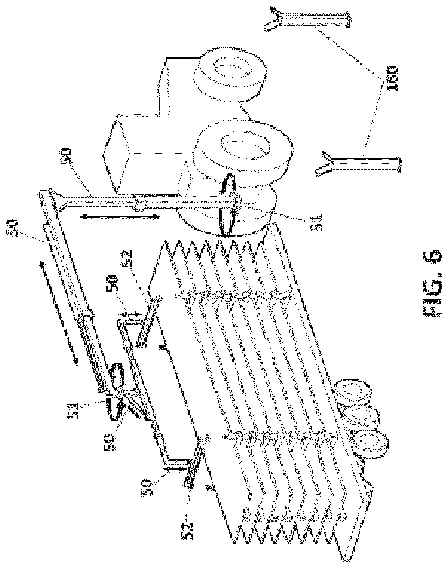

A detailed explanation of a preferred embodiment of the present embodiment is described below, in accordance with figures 1 to 6 mentioned previously.

The fastening and rotating tool (200) comprises a frame (100) which in turn comprises at least two hooks (1) configured to be fastened by preferably automatic installation means (50, 51, 52) of the solar tracker sections (101, 102) and mortises (2) arranged opposite from the hooks (1) configured to receive the at least two hooks (1) of a tool arranged below, such that the hooks (1) and the mortises (2) further define the separation between a first solar tracker section (101) and a second solar tracker section (101) arranged above the first solar tracker section (101) during the transportation of the same.

The fastening and rotating tool further comprises a central slit (3) arranged in the frame (100) and configured to couple the fastening and rotating tool to a central beam (150) of the solar tracker section (101, 102), wherein the central slit (3) is preferably square-shaped.

The central slit (3) is arranged equidistant to the at least two hooks (1) in a central portion of the fastening and rotating tool. Said central slit (3) defines a longitudinal direction corresponding to the longitudinal direction of the central beam (150).

The mortises (2) further comprise first holes (4) which in turn define an axis of rotation (5) and are configured to carry out the rotation of the fastening and rotating tool and, therefore, the tracker section (101, 102) joined to the same 180°, wherein the axis of rotation (5) defined by the first holes (4) of the mortises (2) is parallel to the longitudinal direction of the central slit (150).

The mortises (2) further comprise a second hole (6) configured to carry out the locking of the fastening and rotating tool during transportation, wherein the second hole (6) is perpendicular to a transverse direction that is perpendicular to the longitudinal direction of the central slit (150).

In this exemplary embodiment, the frame of the fastening and rotating tool comprises two flanges (7) joined by reinforcing ribs (8), wherein the hooks are arranged between the flanges (7), projecting above the same (7) and/or the first holes (4) are arranged on ends (9) of the flanges (7) and/or wherein the second holes (6) are arranged on reinforcing ribs (8) arranged on the ends of the frame.

The associated mounting system of the present invention in this embodiment comprises two fastening tools for each one of the solar tracker sections (101 102), preferably at least two fastening and rotating tools for each solar tracker section (102), arranged along the longitudinal direction of the central beam (150).

The system further comprises pre-assembly means (10, 11, 12) configured to carry out the pre-assembly of the fastening and rotating tool or tools to the central beam of the solar tracker section and, thus, to said solar tracker section, wherein said pre-assembly means (10, 11, 12) comprise a pre-assembly table (10), a power supply (11) for central beams (150) and a power supply (12) for photovoltaic modules of the solar tracker sections (101, 102).

The system further comprises support means (20) configured to support the tracker section (101, 102) along with the fastening and rotating tool or tools when the rotation of the tracker section (101, 102) along with the fastening and rotating tool or tools is carried out. The support means comprise rotating legs (20) arranged adjacent to the pre-assembly means (10, 11, 12).

The system further comprises rotating means (30, 31) configured to carry out the rotation of the tracker section by means of the rotating tool or tools from the pre-assembly means (10, 11, 12) to the support means (20). The rotating means comprise a block and tackle (30) and a bar (31) arranged on the inside of the first holes (4) which define the axis of rotation (5), such that the block and tackle (30) carries out the rotation of the solar tracker section (101, 102) by means of the rotating tool or tools due to the fact that the bar (31) is anchored in a rotational manner to the pre-assembly means (10, 11, 12).

The system further comprises autonomous transportation means (40), preferably an autonomous vehicle, configured to transport the tracker sections (101, 102) along with the rotating tools to the definitive location thereof in the field.

The block and tackle (30) of the rotating means (30, 31) are also configured to carry out the movement of the tracker section (101, 102) along with the rotating tool or tools from the support means to the autonomous transportation means (40).

The system further comprises locking means (60) configured to carry out the locking of at least two tracker sections on the autonomous transportation means (40), the first solar tracker section (101) and the second solar tracker section (102) arranged above the first solar tracker section (101) during the transportation of the same by means of the autonomous transportation means (40). The locking means comprise at least one pin (60) arranged inside the second hole (6) of each one of the mortises (2) of each fastening and rotating tool.

The system further comprises installation means (50, 51, 52) for the solar tracker sections (101, 102) on supports (160) of the solar tracker in the field, which are preferably automatic by means of position sensors and computer vision cameras. The installation means comprise a set of telescopic arms (50), slewing rings (51) and gripping means (52) which enable the fastening of the hooks (1) of the fastening and rotating tools and the installation of the solar tracker section (101, 102) on the supports (160) of the solar tracker to be carried out. The installation means (50, 51, 52) further comprise a set of cameras (not shown) which carry out the detection of a set of targets (not shown) arranged on the supports (160) of the solar tracker wherein the solar tracker section will be placed.

## Claims

1. A fastening and rotating tool (200) for mounting sections of photovoltaic solar trackers, **characterised in that** it comprises:
• a frame (100) which in turn comprises:
∘ at least two hooks (1) comprising a first height dimension and which are configured to be fastened by installation means (50, 51, 52) of the solar tracker sections (101, 102); and
∘ mortises (2) arranged opposite from the at least two hooks (1) and which are configured to receive the at least two hooks (1) of a fastening and rotating tool arranged below;
such that the first height dimension of the at least two hooks (1) defines the separation between a first solar tracker section (101) and a second solar tracker section (102) arranged above the first solar tracker section (101) during the transportation of the same.

2. The fastening and rotating tool for mounting sections of photovoltaic solar trackers according to claim 1, **characterised in that** it further comprises a central slit (3) arranged in the frame (100) and configured to couple the fastening and rotating tool to a central beam (150) of the solar tracker section (101, 102), wherein the central slit (3) is preferably square-shaped.

3. The fastening and rotating tool for mounting sections of photovoltaic solar trackers according to claim 2, **characterised in that** the central slit (3) is arranged equidistant to the at least two hooks (1).

4. The fastening and rotating tool for mounting sections of photovoltaic solar trackers according to claims 2 or 3, **characterised in that** the central slit (3) is arranged on the central portion of the fastening and rotating tool.

5. The fastening and rotating tool for mounting sections of photovoltaic solar trackers according to any one of claims 2 to 4, **characterised in that** the central slit (3) defines a longitudinal direction corresponding to the longitudinal direction of the central beam (150).

6. The fastening and rotating tool for mounting sections of photovoltaic solar trackers according to claim 5, **characterised in that** the mortises (2) further comprise first holes (4) which in turn define an axis of rotation (5) and are configured to carry out the rotation of the fastening and rotating tool, and, as a result the tracker section (101, 102) joined to the same.

7. The fastening and rotating tool for mounting sections of photovoltaic solar trackers according to claim 6, **characterised in that** the axis of rotation (5) defined by the first holes (4) of the mortises (2) is parallel to the longitudinal direction of the central slit (150).

8. The fastening and rotating tool for mounting sections of photovoltaic solar trackers according to any one of the preceding claims, **characterised in that** the mortises (2) further comprise a second hole (6) configured to carry out the locking of the fastening and rotating tool during the transportation thereof.

9. The fastening and rotating tool for mounting sections of photovoltaic solar trackers according to claims 5 and 8, **characterised in that** the second hole (6) is perpendicular to a transverse direction which is perpendicular to the longitudinal direction of the central slit (150).

10. The fastening and rotating tool for mounting sections of photovoltaic solar trackers according to any one of the preceding claims, **characterised in that** the frame (100) comprises two flanges (7) joined by reinforcing ribs (8), wherein the hooks are arranged between the flanges (7), projecting above the same (7).

11. The fastening and rotating tool for mounting sections of photovoltaic solar trackers according to claims 6 and 10, **characterised in that** the first holes (4) are arranged at ends (9) of the flanges (7).

12. The fastening and rotating tool for mounting sections of photovoltaic solar trackers according to claims 8 and 10, **characterised in that** the second holes (6) are arranged in reinforcing ribs (8) arranged on ends of the frame (100).

13. A system for mounting sections of photovoltaic solar trackers **characterised in that** it comprises at least one fastening tool of any one of the preceding claims for each one of the solar tracker sections (101, 102).

14. The system for mounting sections of photovoltaic solar trackers according to claim 13, **characterised in that** it comprises at least two fastening and rotating tools for each one of the solar tracker sections (102) according to claim 2, arranged along the longitudinal direction of the central beam (150).

15. The system for mounting sections of photovoltaic solar trackers according to claim 14, **characterised in that** it further comprises pre-assembly means (10, 11, 12) configured to carry out the pre-assembly of the fastening and rotating tool or tools to the central beam (150) of the solar tracker section and, thus, to said solar tracker section.

16. The system for mounting sections of photovoltaic solar trackers according to claim 15, **characterised in that** the pre-assembly means (10, 11, 12) comprise a pre-assembly table (10), a power supply (11) for central beams (150) and a power supply (12) for photovoltaic modules of the solar tracker sections (101, 102).

17. The system for mounting sections of photovoltaic solar trackers according to claim 15, **characterised in that** the system further comprises support means (20) configured to support the tracker section (101, 102) along with the fastening and rotating tool or tools when the rotation of the tracker section (101, 102) along with the fastening and rotating tool or tools is carried out.

18. The system for mounting sections of photovoltaic solar trackers according to claim 17, **characterised in that** the system further comprises rotating means (30, 31) configured to carry out the rotation of the tracker section by means of the rotating tool or tools from the pre-assembly means (10, 11, 12) to the support means (20).

19. The system for mounting sections of photovoltaic solar trackers according to claim 18, **characterised in that** the rotating means comprise a block and tackle (30) and the axis of rotation (31) defined by the first holes (4), such that the block and tackle (30) carries out the rotation of the solar tracker section (101, 102) by means of the rotating tool or tools given that the axis of rotation (31) is anchored in a rotational manner to the pre-assembly means (10, 11, 12).

20. The system for mounting sections of photovoltaic solar trackers according to claim 18, **characterised in that** the system further comprises autonomous transportation means (40), preferably an autonomous vehicle, configured to transport the tracker sections (101, 102) along with the rotating tools to the definitive location thereof in the field.

21. The system for mounting sections of photovoltaic solar trackers according to claim 20, **characterised in that** it further comprises locking means (60) configured to carry out the locking of at least two tracker sections in the autonomous transportation means (40), the first solar tracker section (101) and the second solar tracker section (102) arranged above the first solar tracker section (101) during the transportation of the same by means of the autonomous transportation means (40).

22. The system for mounting sections of photovoltaic solar trackers according to claim 21, **characterised in that** the locking means comprise at least one pin (60) arranged inside the second hole (6) of each one of the mortises (2) of each fastening and rotating tool.

23. The system for mounting sections of photovoltaic solar trackers according to any one of claims 13 to 22, **characterised in that** it further comprises means for installing (50, 51, 52) the solar tracker segments (101, 102) on supports (160) of the solar tracker.

24. The system for mounting sections of photovoltaic solar trackers according to claim 23, **characterised in that** the installation means comprise a set of telescopic arms (50), slewing rings (51) and gripping means (52) which enable the fastening of the hooks (1) of the fastening and rotating tools and the installation of the solar tracker section (101, 102) on the supports (160) of the solar tracker to be performed.

25. The system for mounting sections of photovoltaic solar trackers according to claim 24, **characterised in that** the installation means (50, 51, 52) further comprise a set of position sensors and computer vision cameras which carry out the detection of a set of targets arranged on the supports (160) of the solar tracker in the field.

26. A method for mounting sections of photovoltaic solar trackers carried out with at least one fastening tool for each one of the solar tracker sections of any of claims 1 to 12.

27. The method for mounting sections of photovoltaic solar trackers according to claim 26, **characterised in that** it comprises a pre-assembly step wherein the pre-assembly of the fastening and rotating tool or tools to a central beam of the solar tracker section (101, 102) and, thus, to said solar tracker section (101, 102) is carried out.

28. The method for mounting sections of photovoltaic solar trackers according to claim 27, **characterised in that** it comprises a rotating step wherein the rotation of the tracker section (101, 102) is carried out by means of the rotating tool or tools after the pre-assembly step.

29. The method for mounting sections of photovoltaic solar trackers according to claim 28, **characterised in that** it further comprises a support step wherein the support of the tracker section (101, 102) along with the fastening and rotating tool or tools is carried out after the step of rotating the tracker section (101, 102) by means of the fastening and rotating tool or tools.

30. The method for mounting sections of photovoltaic solar trackers according to claim 29, **characterised in that** it comprises a step of moving the tracker section (101, 102) along with the rotating tool or tools after the support step.

31. The method for mounting sections of photovoltaic solar trackers according to claim 30, **characterised in that** it comprises a transportation step wherein the transportation of the tracker sections (101, 102) along with the rotating tools to the definitive location thereof in the field is carried out.

32. The method for mounting sections of photovoltaic solar trackers according to claim 31, **characterised in that** it further comprises a locking step wherein the locking of at least two tracker sections (101, 102) is carried out, the first solar tracker section (101) and the second solar tracker section (102) above the first solar tracker section (101) during the transportation step of the same.

33. The method for mounting sections of photovoltaic solar trackers according to claim 32, **characterised in that** the locking step is carried out by arranging at least one pin (60) inside a second hole (6) of each one of the mortises (2) of each fastening and rotating tool.

34. The method for mounting sections of photovoltaic solar trackers according to claim 32, **characterised in that** it further comprises a step of installing the solar tracker section (101, 102) on supports (160) of the solar tracker.

35. The method for mounting sections of photovoltaic solar trackers according to claim 34, **characterised in that** it further comprises a step of removing the fastening and rotating tool or tools.

## Amended claims

### Amended claims under Art. 19.1 PCT

1. A fastening and rotating tool (200) for mounting sections of photovoltaic solar trackers, **characterised in that** it comprises:
• a frame (100) which in turn comprises:
- at least two hooks (1) comprising a first height dimension and which are configured to be fastened by installation means (50, 51, 52) of the solar tracker sections (101, 102); and
- mortises (2) arranged opposite from the at least two hooks (1) and which are configured to receive the at least two hooks (1) of a fastening and rotating tool arranged below;
a central slit (3) arranged in the frame (100) and configured to couple the fastening and rotating tool to a central beam (150) of the solar tracker section (101, 102), wherein the central slit (3) defines a longitudinal direction corresponding to the longitudinal direction of the central beam (150),
such that the first height dimension of the at least two hooks (1) defines the separation between a first solar tracker section (101) and a second solar tracker section (102) arranged above the first solar tracker section (101) during the transportation of the same, and
**characterized in that** the frame (100) comprises two flanges (7) joined by reinforcing ribs (8), and
the mortises (2) comprise first holes (4) which in turn define an axis of rotation (5) and are configured to carry out the rotation of the fastening and rotating tool, and, as a result the tracker section (101, 102) joined to the same, and wherein said first holes (4) are arranged at ends (9) of the flanges (7).

2. The fastening and rotating tool for mounting sections of photovoltaic solar trackers according to claim 1, **characterised in that** the central slit (3) is arranged equidistant to the at least two hooks (1).

3. The fastening and rotating tool for mounting sections of photovoltaic solar trackers according to claims 1 or 2, **characterised in that** the central slit (3) is arranged on the central portion of the fastening and rotating tool.

4. The fastening and rotating tool for mounting sections of photovoltaic solar trackers according to claim 1, **characterised in that** the axis of rotation (5) defined by the first holes (4) of the mortises (2) is parallel to the longitudinal direction of the central slit (150).

5. The fastening and rotating tool for mounting sections of photovoltaic solar trackers according to any one of the preceding claims, **characterised in that** the mortises (2) further comprise a second hole (6) configured to carry out the locking of the fastening and rotating tool during the transportation thereof.

6. The fastening and rotating tool for mounting sections of photovoltaic solar trackers according to claim 5, **characterised in that** the second hole (6) is perpendicular to a transverse direction which is perpendicular to the longitudinal direction of the central slit (150).

7. The fastening and rotating tool for mounting sections of photovoltaic solar trackers according to any one of the preceding claims, **characterised in that** hooks are arranged between the flanges (7), projecting above the same (7).

8. The fastening and rotating tool for mounting sections of photovoltaic solar trackers according to claim 5 , **characterised in that** the second holes (6) are arranged in reinforcing ribs (8) arranged on ends of the frame (100).

9. A system for mounting sections of photovoltaic solar trackers **characterised in that** it comprises at least one fastening tool of any one of the preceding claims for each one of the solar tracker sections (101, 102), wherein the system further comprises:
- pre-assembly means (10, 11, 12) configured to carry out the pre-assembly of the fastening and rotating tool or tools to the central beam (150) of the solar tracker section and, thus, to said solar tracker section,
. support means (20) configured to support the tracker section (101, 102) along with the fastening and rotating tool or tools when the rotation of the tracker section (101, 102) along with the fastening and rotating tool or tools is carried out,
- rotating means (30, 31) configured to carry out the rotation of the tracker section by means of the rotating tool or tools from the pre-assembly means (10, 11, 12) to the support means (20).

10. The system for mounting sections of photovoltaic solar trackers according to claim 9, **characterised in that** it comprises at least two fastening and rotating tools for each one of the solar tracker sections (102) according to claim 2, arranged along the longitudinal direction of the central beam (150).

11. The system for mounting sections of photovoltaic solar trackers according to claim 9, **characterised in that** the pre-assembly means (10, 11, 12) comprise a pre-assembly table (10), a power supply (11) for central beams (150) and a power supply (12) for photovoltaic modules of the solar tracker sections (101, 102).

12. The system for mounting sections of photovoltaic solar trackers according to claim 9, **characterised in that** the rotating means comprise a block and tackle (30) and the axis of rotation (31) defined by the first holes (4), such that the block and tackle (30) carries out the rotation of the solar tracker section (101, 102) by means of the rotating tool or tools given that the axis of rotation (31) is anchored in a rotational manner to the pre-assembly means (10, 11, 12).

13. The system for mounting sections of photovoltaic solar trackers according to claim 9, **characterised in that** the system further comprises autonomous transportation means (40), preferably an autonomous vehicle, configured to transport the tracker sections (101, 102) along with the rotating tools to the definitive location thereof in the field.

14. The system for mounting sections of photovoltaic solar trackers according to claim 13, **characterised in that** it further comprises locking means (60) configured to carry out the locking of at least two tracker sections in the autonomous transportation means (40), the first solar tracker section (101) and the second solar tracker section (102) arranged above the first solar tracker section (101) during the transportation of the same by means of the autonomous transportation means (40).

15. The system for mounting sections of photovoltaic solar trackers according to claim 14, **characterised in that** the locking means comprise at least one pin (60) arranged inside the second hole (6) of each one of the mortises (2) of each fastening and rotating tool.

16. The system for mounting sections of photovoltaic solar trackers according to any one of claims 9 to15, **characterised in that** it further comprises means for installing (50, 51, 52) the solar tracker segments (101, 102) on supports (160) of the solar tracker.

17. The system for mounting sections of photovoltaic solar trackers according to claim 16, **characterised in that** the installation means comprise a set of telescopic arms (50), slewing rings (51) and gripping means (52) which enable the fastening of the hooks (1) of the fastening and rotating tools and the installation of the solar tracker section (101, 102) on the supports (160) of the solar tracker to be performed.

18. The system for mounting sections of photovoltaic solar trackers according to claim17, **characterised in that** the installation means (50, 51, 52) further comprise a set of position sensors and computer vision cameras which carry out the detection of a set of targets arranged on the supports (160) of the solar tracker in the field.

19. A method for mounting sections of photovoltaic solar trackers carried out with at least one fastening tool for each one of the solar tracker sectionsof any of claims 1 to 8, comprising the following steps:
- a pre-assembly step wherein the pre-assembly of the fastening and rotating tool or tools to a central beam of the solar tracker section (101, 102) and, thus, to said solar tracker section (101, 102) is carried out,
- a rotating step wherein the rotation of the tracker section (101, 102) is carried out by means of the rotating tool or tools after the pre-assembly step, and
- a support step wherein the support of the tracker section (101, 102) along with the fastening and rotating tool or tools is carried out after the step of rotating the tracker section (101, 102) by means of the fastening and rotating tool or tools.

20. The method for mounting sections of photovoltaic solar trackers according to claim 19, **characterised in that** it comprises a step of moving the tracker section (101, 102) along with the rotating tool or tools after the support step.

21. The method for mounting sections of photovoltaic solar trackers according to claim 20, **characterised in that** it comprises a transportation step wherein the transportation of the tracker sections (101, 102) along with the rotating tools to the definitive location thereof in the field is carried out.

22. The method for mounting sections of photovoltaic solar trackers according to claim 21, **characterised in that** it further comprises a locking step wherein the locking of at least two tracker sections (101, 102) is carried out, the first solar tracker section (101) and the second solar tracker section (102) above the first solar tracker section (101) during the transportation step of the same.

23. The method for mounting sections of photovoltaic solar trackers according to claim 22, **characterised in that** the locking step is carried out by arranging at least one pin (60) inside a second hole (6) of each one of the mortises (2) of each fastening and rotating tool.

24. The method for mounting sections of photovoltaic solar trackers according to claim 21, **characterised in that** it further comprises a step of installing the solar tracker section (101, 102) on supports (160) of the solar tracker.

25. The method for mounting sections of photovoltaic solar trackers according to claim 24, **characterised in that** it further comprises a step of removing the fastening and rotating tool or tools.
